# EUROPÄISCHE PATENTSCHRIFT

(11) **EP 2 333 352 B1**
(45) Veröffentlichungstag und Bekanntmachung des Hinweises auf die Patenterteilung: **12.07.2017**
(21) Anmeldenummer: 10015453.3
(22) Anmeldetag: 09.12.2010
(51) Int. Cl.: F15B 15/14, F16J 1/01, F16J 1/12, F15B 15/28, F16F 9/32

(54) **Komplettkolben und dessen Verwendung**
Complete piston and its use
Piston complet et son utilisation

(30) Priorität: 10.12.2009 DE 102009057484
(43) Veröffentlichungstag der Anmeldung: 15.06.2011
(73) Patentinhaber: Carl Freudenberg KG, 69469 Weinheim (DE)
(72) Erfinder: Barillas, Gonzalo A., 36304 Alsfeld (DE); Jäckel, Jürgen, 34637 Schrecksbach (DE); Kinsch, Patrick, 34590 Wabern (DE); Hermann, Armin, 34613 Schwalmstadt (DE); Näser, Hartmut, 34613 Schwalmstadt (DE)

(56) Entgegenhaltungen:
- EP-A1- 1 818 545
- DE-A1- 3 015 258
- DE-U1-202005 010 618
- DE-U1-202005 013 185
- US-A- 5 947 001

## Beschreibung

### Technisches Gebiet

Die Erfindung betrifft einen Komplettkolben, umfassend einen kreisringförmigen Träger aus polymerem Werkstoff und zumindest einen Dichtring, der mit dem Träger verbunden ist, wobei der Dichtring zumindest eine Dichtlippe aufweist, die den Träger radial nach außen überragt und mit einer Wandung eines den Komplettkolben umschließenden Zylinders dichtend in Berührung bringbar ist, wobei im Träger ein permanentmagnetischer Magnetring angeordnet ist und wobei der Träger an seinem Innenumfang eine Kolbenaufnahme aufweist, die axial beiderseits durch jeweils eine Stirnseite begrenzt ist.

### Stand der Technik

Ein solcher Komplettkolben ist aus der DE 30 15 258 A1 bekannt. Der Träger weist an seinem Innenumfang eine Kolbenaufnahme auf, die axial beiderseits jeweils scharfkantig in die entsprechende Stirnseite übergeht. Der Komplettkolben hat stirnseitig einerseits eine sich in axialer Richtung erstreckende Vertiefung, in der eine Mutter angeordnet ist, mit der der Komplettkolben auf einen mit Gewinde versehenen, einen verminderten Durchmesser aufweisenden Endabschnitt einer Kolbenstange aufgeschraubt ist. Durch die Vertiefung und die Anordnung der Mutter in der Vertiefung weist der Komplettkolben eine Kolbenaufnahme mit nur einer geringen axialen Breite auf. Die gesamte Komplettkolbenanordnung, umfassend den auf dem Endabschnitt der Kolbenstange montierten Komplettkolben, weist durch die Vertiefung kompakte Abmessungen in axialer Richtung auf.
Die Genauigkeit der Zentrierung des Komplettkolbens auf der Kolbenstange ist abhängig von den fertigungstechnisch darstellbaren Toleranzen.

Ein weiterer Komplettkolben, der die eingangs genannten Merkmale umfasst, ist aus der DE 20 2005 013 185 U1 bekannt. Die innenumfangsseitig des Trägers angeordnete Kolbenaufnahme hat stirnseitig beiderseits jeweils eine kleine Fase, die eine vereinfachte Montage des Komplettkolbens auf einem Endabschnitt einer Kolbenstange ermöglicht. Die Fase ist nur eine Montagehilfe und berührt bei auf dem Endabschnitt montierten Komplettkolben die Kolbenstange nicht.
Die Genauigkeit der Zentrierung des Komplettkolbens auf der Kolbenstange ist abhängig von den fertigungstechnisch darstellbaren Toleranzen.

Ein weiterer Komplettkolben ist aus der EP 1 818 545 A1 bekannt. Der Träger besteht aus PolyButhylenTerephthalat (PBT), um das Gewicht des Komplettkolbens, im Vergleich zu einem Komplettkolben aus einem metallischen Werkstoff, zu verringern. Der Träger weist auf seinem Kreisumfang eine zylindrische Führungsfläche auf, und in einer Ringnut ist der Magnetring angeordnet. Der Dichtring ist mit dem Träger verbunden und auf den Träger aufgespritzt oder aufgeschnappt. Stirnseitig beiderseits des Komplettkolbens sind axial vorstehende Anschlagpuffer vorgesehen, die einstückig mit dem Dichtring ausgebildet sind. Die Kolbenaufnahme des Komplettkolbens ist durch eine zentrale zylindrische Durchbrechung des Trägers gebildet, wobei die zentrale zylindrische Durchbrechung während der bestimmungsgemäßen Verwendung des Komplettkolbens von einer Kolbenstange durchdrungen ist. Die Genauigkeit der Zentrierung des Komplettkolbens auf der Kolbenstange ist abhängig von den fertigungstechnisch darstellbaren Toleranzen.

### Darstellung der Erfindung

Der Erfindung liegt die Aufgabe zu Grunde, einen Komplettkolben der eingangs genannten Art derart weiterzuentwickeln, dass die Zentrierung des Komplettkolbens auf der Kolbenstange konstruktiv einfacher und fertigungstechnisch wirtschaftlicher erfolgen kann.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass zumindest eine der Stirnseiten eine Fase mit einer Anlagefläche zur Eigenzentrierung des Komplettkolbens aufweist und dass das Verhältnis aus axialer Breite des Trägers am Innenumfang zur Breite der Fase 4,5 bis 9 beträgt.

Die Herstellung einer Fase zur Eigenzentrierung des Komplettkolbens an der Kolbenaufnahme ist in fertigungstechnischer Hinsicht sehr einfach und kostengünstig. Die Zentrierung des Komplettkolbens erfolgt selbsttätig dadurch, dass die Fase des Komplettkolbens während der Montage auf einer Kolbenstange an eine kongruent gestaltete Zentriereinrichtung der Kolbenstange angelegt wird. Die Kolbenstange ist zum Beispiel angefast, eine der Stirnseiten des Komplettkolbens legt sich an die Fase der Kolbenstange an und die andere Stirnseite des Komplettkolbens wird z.B. durch ein Verschraubungselement mit Fase ebenfalls zentriert.

Durch eine solche Ausgestaltung ist eine teure, besonders maßgenaue Bearbeitung der Kolbenstange und der Kolbenbohrung des Komplettkolbens nicht erforderlich.

Das Verhältnis aus axialer Breite des Trägers am Innenumfang zur Breite der Fase beträgt 4,5 bis 9. Fasen, wie sie beispielsweise im Stand der Technik zur Anwendung gelangen, um O-Ringe unbeschädigt montieren zu können, sind in ihren Abmessungen zu klein, um eine Zentrierung des Komplettkolbens bezogen auf die Kolbenstange zu erreichen. Durch die vergleichsweise große Fase des erfindungsgemäßen Komplettkolbens ist außerdem die spezifische mechanische Belastung auf die große Anlagefläche der Fase vergleichsweise gering, was im Hinblick auf die Haltbarkeit und Formbeständigkeit des kreisringförmigen Trägers aus polymerem Werkstoff von hervorzuhebendem Vorteil ist.

Bevorzugt weisen beide innenumfangsseitigen Stirnseiten jeweils eine Fase zur Eigenzentrierung des Komplettkolbens auf. Dadurch ist der Komplettkolben stirnseitig beiderseits zentriert. Durch diese exakte Zentrierung weist der Komplettkolben gleich bleibend gute Gebrauchseigenschaften während einer langen Gebrauchsdauer auf. Die Gebrauchsdauer verringernde Exzentrizitäten des Komplettkolbens auf der Kolbenstange und dadurch eine unerwünscht hohe mechanische Beanspruchung des Dichtrings werden durch die einfache und exakte gegenseitige Zuordnung von Komplettkolben und Kolbenstange zueinander vermieden.

Der polymere Träger ist bevorzugt vollständig materialeinheitlich ausgebildet. Metallische Stützkörper oder Kerne aus metallischen Werkstoffen, an denen der Dichtring befestigt ist oder die einen mehrteiligen Träger zusammenhalten, sind nicht erforderlich. Das Gewicht des Komplettkolbens und daraus resultierend seine Massenträgheit sind deshalb gering. Außerdem ist ein solcher Komplettkolben durch seine Einfachheit kostengünstig herstellbar.

Um die mechanischen Belastungen des Kolbens aufzufangen, werden Hochleistungskunststoffe bevorzugt.

Der Magnetring Ist In einer außenumfangsseitig angeordneten, radial nach außen offenen Nut des Trägers angeordnet. Der Magnetring ist vorgesehen, um die Position des Komplettkolbens innerhalb des Zylinders detektieren zu können. Die Erfassung der Position des Komplettkolbens erfolgt zum Beispiel durch Wegaufnehmer, die außenumfangsseitig am Zylinder angeordnet sind.

Der Komplettkolben kann ein Führungselement umfassen, wobei der Magnetring radial außenseitig von dem Führungselement umschlossen ist, wobei das Führungselement an die Wandung des Zylinders anlegbar ist und die Nut im Wesentlichen vollständig überdeckt. Das Führungselement sorgt nicht nur für die Führung des Komplettkolbens und der Kolbenstange innerhalb des Zylinders, sondern das Führungselement sorgt auch dafür, dass der Magnetring vor schädlichen äußeren Einflüssen geschützt ist
Das Führungselement besteht bevorzugt aus einem polymeren Werkstoff.

Das Führungselement kann, bezogen auf den Träger, separat erzeugt und mit dem Träger verbunden sein. Hierbei ist von Vorteil, dass das Material, aus dem das Führungselement besteht, besonders gut an die jeweiligen Gegebenheiten des Anwendungsfalles angepasst werden kann. So besteht beispielsweise die Möglichkeit, das Führungselement aus einem Werkstoff herzustellen, der einerseits besonders verschleißarm ist und andererseits besonders reibungsarm.

Demgegenüber kann es vorgesehen sein, dass das Führungselement und der Träger einstückig ineinander übergehend und materialeinheitlich ausgebildet sind. Ein solcher Komplettkolben ist besonders teilearm und einfach und kostengünstig zu fertigen.

Der Träger kann durch zwei axial zueinander angeordnete und miteinander verbundene Kolbenscheiben gebildet sein. Dabei ist von Vorteil, dass ein kreisringförmiger in sich geschlossener Magnetring zur Anwendung gelangen kann. Dieser Magnetring wird bei der Montage zwischen den beiden Kolbenscheiben positioniert und durch die beiden miteinander verbundenen Kolbenscheiben während der bestimmungsgemäßen Verwendung in seiner Position gehalten.

Bei einer solchen Ausgestaltung sind die Kolbenscheiben bevorzugt als Gleichteile ausgebildet. Die Herstellung des Komplettkolbens und die Lagerhaltung der Kolbenscheiben sind dadurch vereinfacht.

Die Kolbenscheiben können Erhebungen und zu den Erhebungen kongruente Aussparungen aufweisen. Dadurch wird eine Halterung der Kolbenscheiben zueinander durch Reibschluss gegeben und die Verschiebung der Kolbenscheiben relativ zueinander unter Last wird vermieden.

Die Kolbenscheiben haben zur Fixierung aneinander bevorzugt Süftausnehmungen und kongruent dazu gestaltete Aussparungen, die ineinander eingrelfen und durch Reibschluss die Kolbenscheiben aneinander haften. Die Verschiebung der Kolbenscheiben unter Last relativ zueinander wird dadurch vermieden.

Die Nut für den Magnetring kann dadurch gebildet sein, dass jede Kolbenscheibe eine außenumfangsseitig angeordnete, L-förmige oder C-förmige Ausnehmung aufweist, wobei die Kolbenscheiben derart miteinander montiert werden, dass die beiden L-förmigen oder C-förmigen Ausnehmungen zusammen die Nut für den Magnetring bilden.

Bei einer davon abweichenden Ausgestaltung kann es vorgesehen sein, dass der Träger einstückig ausgebildet ist. In einem solchen Fall stehen einem teilearmen einfachen Aufbau des Trägers ein etwas komplizierter gestalteter Magnetring und dessen etwas aufwändigere Montage entgegen.

Der Magnetring kann in einem solchen Fall durch zwei Halbschalensegmente gebildet seien. Ein derart geteilter Magnetring kann dennoch problemlos in den einstückig ausgebildeten Träger montiert werden.

Alternativ zu dem zuvor beschriebenen geteilten Magnetring, kann der Magnetring durch eine in die Nut eingespritzte Magnetmasse gebildet sein, Magnete im Spritzgußverfahren herzustellen, ist bekannt.

Die Herstellung eines einstückigen Trägers kann dadurch erfolgen, dass ein Magnetring in die Kavität eines Werkzeugs eingelegt und vom polymeren Werkstoff des Trägers umspritzt wird. In einem solchen Fall kann der Magnetring, der zur Anwendung gelangt, kreisringförmig in sich geschlossen ausgebildet sein.

Außerdem betrifft die Erfindung die Verwendung eines Komplettkolbens, wie zuvor beschrieben. Erfindungsgemäß gelangt ein solcher Komplettkolben in einem Pneumatikantrieb zur Anwendung. Die Verwendung eines solchen Komplettkolbens in einem Pneumatikantrieb ist besonders vorteilhaft, weil die Montage von Magnetring und Kolbenhälften und gegebenenfalls Führungsring entfällt. Die Handhabung und Bereitstellung im Montagebereich von Zylindern vereinfacht sich.

Die Dichtlippe und/oder die stirnseitig am Träger angeordneten Anschlagpuffer können aus einem elastomeren oder thermoplastisch elastomeren Werkstoff bestehen.

### Kurzbeschreibung der Zeichnung

Fünf Ausführungsbeispiele des erfindungsgemäßen Komplettkolbens werden nachfolgend anhand der Figuren 1 bis 5 näher erläutert. Diese zeigen jeweils in schematischer Darstellung:
Figuren 1 bis 3 drei Ausführungsbeispiele, bei denen der Träger durch zwei axial benachbart zueinander angeordnete und miteinander verbundene Kolbenscheiben gebildet ist, wobei die Dichtringe und die Führungselemente voneinander abweichend gestaltet sind.
Figuren 4 und 5 zwei weitere Ausführungsbeispiele, bei denen der Trägers einstückig ausgebildet ist, ebenfalls mit Dichtringen und Führungselementen, die voneinander abweichend gestattet sind.

### Ausführung der Erfindung

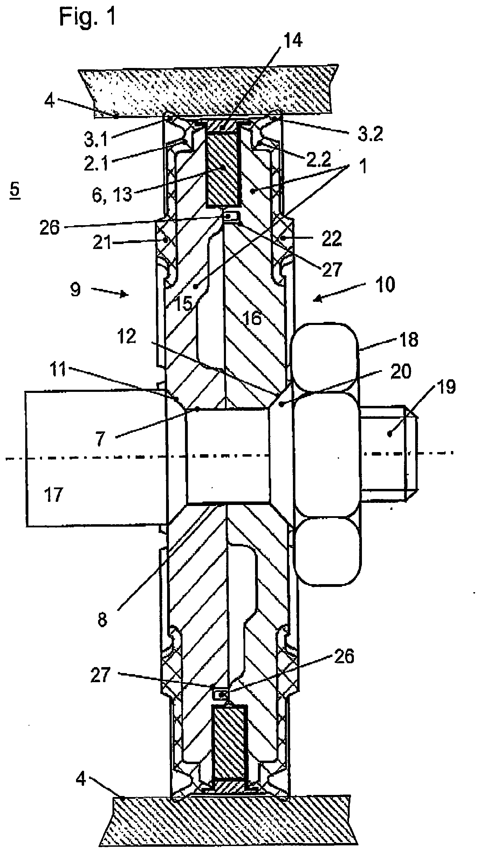

In den Figuren 1 bis 5 sind fünf Ausführungsbeispiele des erfindungsgemäßen Komplettkolbens gezeigt, die jeweils in einem Pneumatikantrieb zur Anwendung gelangen.
Jeder Komplettkolben weist einen Träger 1 auf, der kreisringförmig ausgebildet ist und vollständig aus einem polymeren Werkstoff besteht Außenumfangsseitig ist der Träger 1 von einem Dichtring 2 oder zwei Dichtringen 2.1, 2.2 umschlossen, und im Bereich der beiden Stirnseiten des Trägers 1 ist jeweils eine Dichtlippe 3.1, 3.2 angeordnet. Die Dichtlippen 3.1, 3.2 sind an die Wandung 4 eines Zylinders 5 dichtend anlegbar, wobei der Zylinder 5 mit strich-punktierten Linien schematisch dargestellt ist Außenumfangsseitig im Träger 1 ist ein permanentmagnetischer Magnetring 6 angeordnet, um die Stellung des Komplettkolbens innerhalb des Zylinders 5 detektieren zu können.
An seinem Innenumfang 7 weist der Träger 1 eine Kolbenaufnahme 8 auf, durch die der Komplettkolben auf der Kolbenstange 17 festgelegt ist. Die Kolbenaufnahme 8 ist axial beiderseits jeweils durch eine Stirnseite 9,10 begrenzt. Beide Stirnseiten 9, 10 sind jeweils mit einer Fasen 11, 12 versehen, so dass sich während der Montage des Komplettkolbens auf der Kolbenstange 17 eine Eigenzentrierung des Komplettkolbens ergibt.
Die Eigenzentrierung des Komplettkolbens auf der Kolbenstange 17 erfolgt dadurch, dass der Komplettkolben axial auf die Kolbenstange 17 aufgeschoben wird, bis er mit seiner Fase 11 an einer kongruent gestalteten konischen Fläche der Kolbenstange 17 anliegt. Bereits dadurch erfolgt eine Zentrierung der ersten Stirnseite 9 relativ zur Kolbenstange 17. Zur Sicherung des Komplettkolbens auf der Kolbenstange 17 ist zum Beispiel eine Mutter 18 vorgesehen, die auf einen mit einem Gewinde versehenen Zapfen 19 der Kolbenstange 17 aufschraubbar ist Um eine Zentrierung auch der zweiten Stirnseite 10 der Kolbenaufnahme 8 relativ zur Kolbenstange 17 zu erreichen, kann eine keilförmige Ausführung der Mutter 20 vorgesehen sein, die auf der dem Träger 1 zugewandten Seite der Mutter 18 angeordnet ist. Beim Aufdrehen der Mutter 18 auf das Gewinde des Zapfens 19 wird dann der Konus der Mutter 20, die auf der dem Träger 1 axial zugewandten Seite eine zur Fase 12 kongruente Fläche aufweist, mit dieser Fläche an die Fase 12 bewegt, so dass durch die Montage des Komplettkolbens auf der Kolbenstange 17 auch diese Stirnseite 10 selbsttätig zur Kolbenstange 17 zentriert wird.

Um eine zuverlässige Zentrierung des Komplettkolbens auf der Kolbenstange 18 zu gewährleisten, beträgt das Verhältnis aus axialer Breite des Trägers 1 am Innenumfang zur Breite der Fasen 11, 12 in den hier gezeigten Ausführungsbeispielen 6,5 bis 7.

In jedem der Ausführungsbeispiele ist der Magnetring 6 in einer außenumfangsseitig angeordneten radial nach außen offenen Nut 13 des Trägers 1 angeordnet.

Außerdem ist der Träger 1 der stirnseitig beiderseits mit Anschlagpuffern 21, 22 versehen, die in den hier gezeigten Ausführungsbeispielen einstückig ineinander übergehend und materialeinheitlich mit den Dichtringen 2, 2.1, 2.2 und den Dichtlippen 3.1. 3.2 ausgebildet sind.

In den Figuren 1 bis 3 sind drei Ausführungsbeispiele gezeigt, bei denen der jeweilige Träger 1 jeweils durch zwei axial benachbart zueinander angeordnete und miteinander verbundene Kolbenscheiben 15, 16 gebildet ist Die Kolbenscheiben 15, 16 sind als Gleichteile ausgebildet. Die Dichtringe 2 und die Führungselemente 14 sind in den jeweiligen Ausführungsbeispielen voneinander abweichend gestaltet.

Die Kolbenscheiben 15, 16 besitzen zur Fixierung aneinander Stiftausformungen 26 und Aussparungen 27, die ineinander eingreifen und durch Reibschluss die Kolbenscheiben 15, 16 halten. Dadurch wird zudem die Verschiebung der Kolbenscheiben 15, 16 unter Last relativ zueinander vermindert.

Bei dem ersten Ausführungsbeispiel aus Figur 1 ist der Magnetring 6 radial außenseitig von dem Führungselement 14 umschlossen. Das Führungselement 14 überdeckt die Nut 13, in der der Magnetring 6 angeordnet ist, im Wesentlichen vollständig. Das Führungselement 14 ist, bezogen auf den Träger 1, separat erzeugt und auf den Träger 1 aufgeschnappt. Das Führungselement 14 schützt einerseits den Magnetring 6 vor unerwünschten äußeren Einflüssen und schützt andererseits die Dichtlippen 3.1, 32 vor einer mechanischen Überbeanspruchung dadurch, dass der Führungsring 14 an die Wandung 4 des Zylinders 5 anlegbar ist.

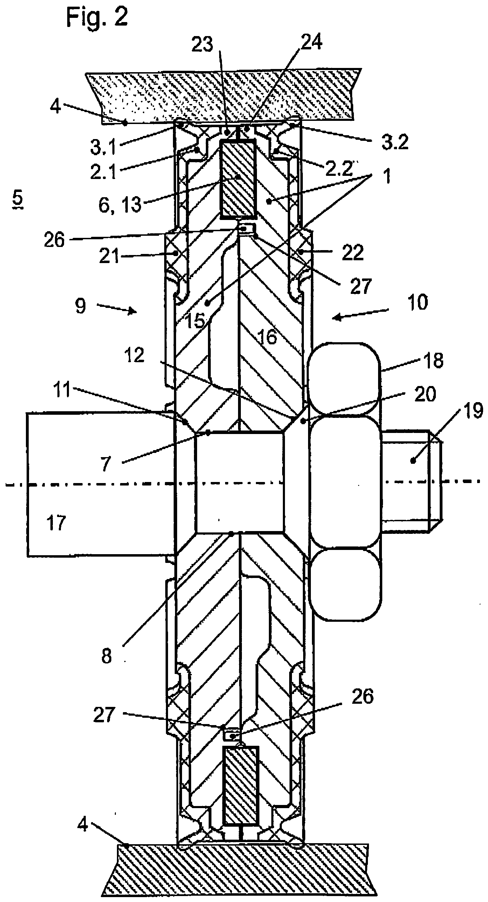

Das zweite Ausführungsbeispiel aus Figur 2 unterscheidet sich von dem ersten Ausführungsbeispiel gemäß Figur 1 dadurch, dass der Führungsring 14 durch Axialvorsprünge 23, 24 gebildet ist, die einstückig und materialeinheitlich mit den jeweiligen Kolbenscheiben 15, 16 ausgebildet sind und den Magnetring 6 außenumfangsseitig gemeinsam umschließen. Dadurch, dass der Führungsring 14 nicht separat erzeugt und montiert werden muss, weist ein solcher Komplettkolbens einen teilearmen und einfachen Aufbau auf.

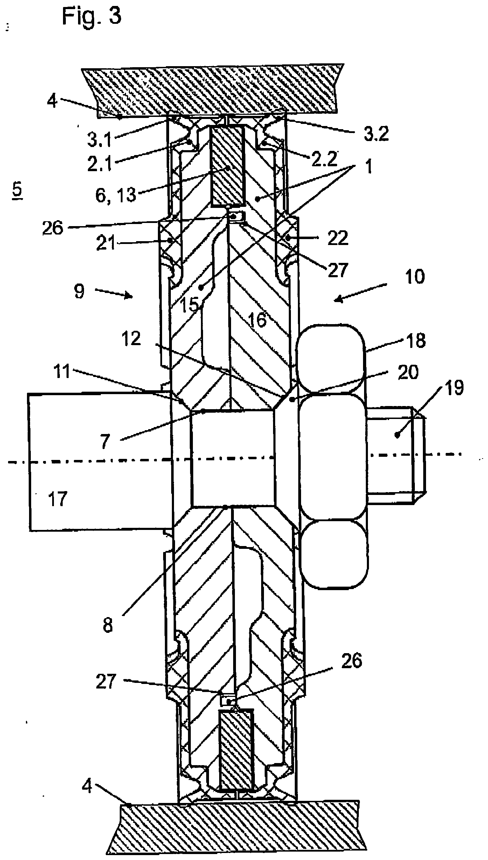

Das dritte Ausführungsbeispiel aus Figur 3 unterscheidet sich vom zweiten Ausführungsbeispiel gemäß Figur 2 dadurch, dass der Führungsring 14 aus elastomerem Werkstoff besteht und einstückig und materialeinheitlich mit den Dichtringen 2, 2.1, 2.2 und den Dichtlippen 3.1, 3.2 ausgebildet ist.

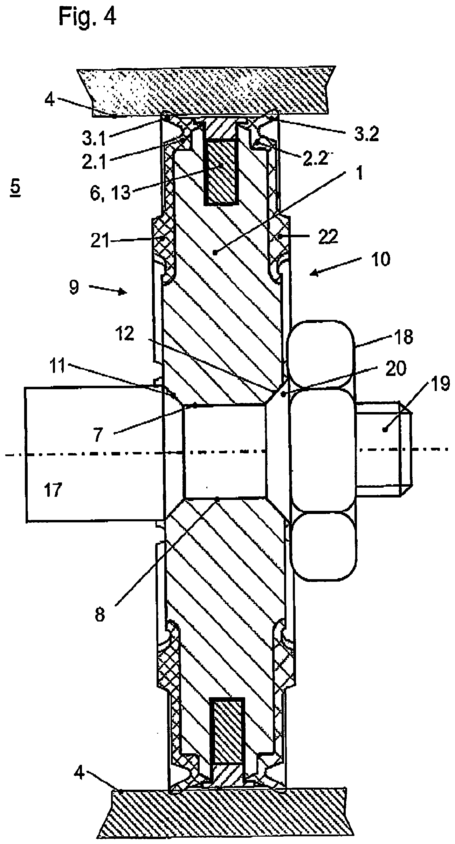

In den Figuren 4 bis 6 sind weitere drei Ausführungsbeispiele gezeigt, bei denen der Träger 1 einstückig ausgebildet ist, ebenfalls mit Dichtringen 2 und Führungselementen 14, die voneinander abweichend gestaltet sind.

Die Ausführungsbeispiele gemäß Figuren 4 bis 6 unterscheiden sich von den Ausführungsbeispielen gemäß Figuren 1 bis 3 durch einen abweichend gestalteten Träger 1. Die Anordnung des Magnetrings 6 im Träger 1 und die Ausgestaltung der Führungselement 14 zum Schutz des Magnetrings 6 und zur Führung des Komplettkolbens an der Wandung 4 des Zylinders 5 sind demgegenüber im Wesentlichen gleich.

Durch den einstückig ausgebildeten Träger 1 ist der Magnetring 6 entweder durch zwei Halbschalensegmenten gebildet oder der Magnetring 6 besteht aus einer in die Nut 13 eingespritzten Magnetmasse. Ein einteiliger umfangsseitig in sich geschlossen ausgebildeter Magnetring 6 wie in den Ausführungsbeispielen gemäß Figuren 1 bis 3 könnte in einen einstückig ausgebildeten Träger 1, wie in den Figuren 4 bis 6, nicht montiert werden.

Im vierten Ausführungsbeispiel aus Figur 4 ist ein separat erzeugtes Führungselement 14 vorgesehen, das auf den Träger 1 aufgeschnappt ist Die Dichtlippen 3.1, 3,2 grenzen jeweils axial auf ihren einander zugewandten Seiten an das Führungselement 14 an.

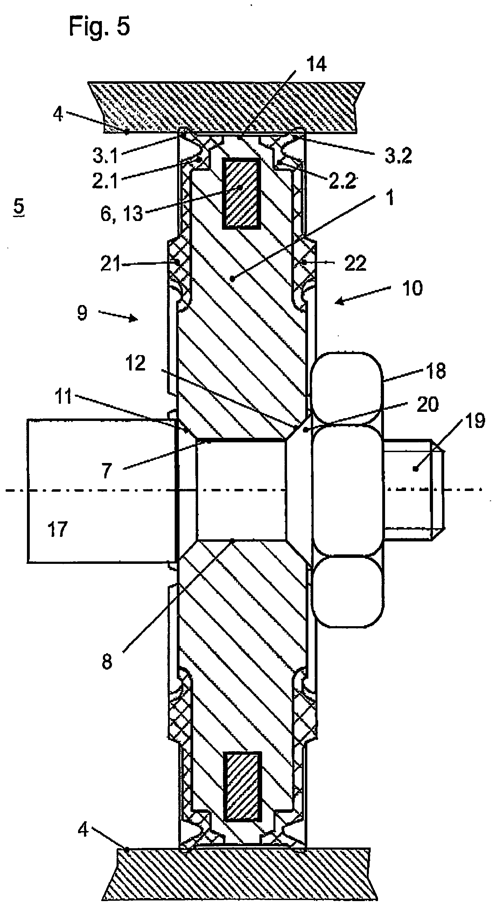

In Figur 5 ist ein fünftes Ausrtührungsbeispiel gezeigt, bei dem der Magnetring 6 von polymerem Werkstoff des Trägers 1 umspritzt ist. Das Führungselement 14 wird durch den Träger 1 selbst gebildet.

## Patentansprüche

1. Komplettkolben, umfassend einen kreisringförmigen Träger (1) aus polymerem Werkstoff und zumindest einen Dichtring (2), der mit dem Träger (1) verbunden ist, wobei der Dichtring (2) zumindest eine Dichtlippe (3) aufweist, die den Träger (1) radial nach außen überragt und mit einer Wandung (4) eines den Komplettkolben umschließenden Zylinders (5) dichtend in Berührung bringbar ist, wobei im Träger (1) ein permanentmagnetischer Magnetring (6) angeordnet ist und wobei der Träger (1) an seinem Innenumfang (7) eine Kolbenaufnahme (8) aufweist, die axial beiderseits durch jeweils eine Stirnseite (9, 10) begrenzt ist, **dadurch gekennzeichnet, dass** zumindest eine der Stirnseiten (9, 10) eine Fase (11) mit einer Anlagefläche zur Eigenzentrierung des Komplettkolbens an der Kolbenaufnahme (8) aufweist und dass das Verhältnis aus axialer Breite des Trägers (1) am Innenumfang (7) zur Breite der Fasen (11, 12) 4,5 bis 9 beträgt.

2. Komplettkolben nach Anspruch 1, **dadurch gekennzeichnet, dass** beide innenumfangsseitigen Stirnseiten (9, 10) jeweils eine Fase (11, 12) zur Eigenzentrierung des Komplettkolbens aufweisen.

3. Komplettkolben nach einem der Ansprüche 1 oder 2, **dadurch gekennzeichnet, dass** der Träger (1) vollständig materialeinheitlich ausgebildet ist.

4. Komplettkolben nach einem der Ansprüche 1 bis 3, **dadurch gekennzeichnet, dass** der Magnetring (6) in einer außenumfangsseitig angeordneten radial nach außen offenen Nut (13) des Trägers (1) angeordnet ist.

5. Komplettkolben nach einem der Ansprüche 1 bis 4, **dadurch gekennzeichnet, dass** der Komplettkolben ein Führungselement (14) umfasst und dass der Magnetring (6) radial außenseitig von dem Führungselement (14) umschlossen ist, das an die Wandung (4) des Zylinders (5) anlegbar ist und die Nut (13) im wesentlichen vollständig überdeckt.

6. Komplettkolben nach Anspruch 5, **dadurch gekennzeichnet, dass** das Führungselement (14), bezogen auf den Träger (1), separat erzeugt und mit dem Träger (1) verbunden ist.

7. Komplettkolben nach Anspruch 5, **dadurch gekennzeichnet, dass** das Führungselement (14) und der Träger (1) einstückig ineinander übergehend und materialeinheitlich ausgebildet sind.

8. Komplettkolben nach einem der Ansprüche 1 bis 7, **dadurch gekennzeichnet, dass** der Träger (1) durch zwei axial zueinander angeordnete und miteinander verbindbare Kolbenscheiben (15, 16) gebildet ist.

9. Komplettkolben nach Anspruch 8, **dadurch gekennzeichnet, dass** die Kolbenscheiben (15, 16) als Gleichteile ausgebildet sind.

10. Komplettkolben nach einem der Ansprüche 8 oder 9, **dadurch gekennzeichnet, dass** die Kolbenscheiben (15, 16) Erhebungen (26) und dazu kongruente Aussparungen (27) aufweisen.

11. Komplettkolben nach einem der Ansprüche 8 bis 10, **dadurch gekennzeichnet, dass** die Nut (13) durch beide Kolbenscheiben (15, 16) begrenzt ist.

12. Komplettkolben nach einem der Ansprüche 1 bis 7, **dadurch gekennzeichnet, dass** der Träger (1) einstückig ausgebildet ist.

13. Komplettkolben nach Anspruch 12, **dadurch gekennzeichnet, dass** der Magnetring (6) durch zwei Halbschalensegmente gebildet ist.

14. Komplettkolben nach Anspruch 12, **dadurch gekennzeichnet, dass** der Magnetring (6) durch eine in die Nut (13) eingespritzte Magnetmasse gebildet ist.

15. Komplettkolben nach Anspruch 12, **dadurch gekennzeichnet, dass** der Magnetring (6) vom polymeren Werkstoff des Trägers (1) umspritzt ist.

16. Komplettkolben nach einem der Ansprüche 1 bis 15, **dadurch gekennzeichnet, dass** der Träger (1) stirnseitig angeordnete Anschlagpuffer (21, 22) aufweist.

17. Komplettkolben nach einem der Ansprüche 1 bis 16, **dadurch gekennzeichnet, dass** der Dichtring (2) und/oder die Anschlagpuffer (21, 22) aus einem elastomeren oder thermoplastisch elastomeren Werkstoff bestehen.

18. Verwendung eines Komplettkolbens nach einem der Ansprüche 1 bis 17 in einem Pneumatikantrieb.

## Claims

1. Complete piston, comprising a circularly annular carrier (1) made from polymeric material and at least one sealing ring (2) which is connected to the carrier (1), the sealing ring (2) having at least one sealing lip (3) which protrudes beyond the carrier (1) radially to the outside and can be brought into contact sealingly with a wall (4) of a cylinder (5) which encloses the complete piston, a permanently magnetic magnet ring (6) being arranged in the carrier (1), and the carrier (1) having, on its inner circumference (7), a piston holder (8) which is delimited axially on both sides by way of in each case one end side (9, 10), **characterized in that** at least one of the end sides (9, 10) has a bevel (11) with a bearing face for automatic centring of the complete piston on the piston holder (8), and **in that** the ratio of the axial width of the carrier (1) on the inner circumference (7) to the width of the bevels (11, 12) is from 4.5 to 9.

2. Complete piston according to Claim 1, **characterized in that** both inner circumferential end sides (9, 10) have in each case one bevel (11, 12) for automatic centring of the complete piston.

3. Complete piston according to either of Claims 1 and 2, **characterized in that** the carrier (1) is configured such that it is formed completely from the same material.

4. Complete piston according to one of Claims 1 to 3, **characterized in that** the magnet ring (6) is arranged in a radially outwardly open groove (13) of the carrier (1), which groove (13) is arranged on the outer circumferential side.

5. Complete piston according to one of Claims 1 to 4, **characterized in that** the complete piston comprises a guide element (14), and **in that** the magnet ring (6) is enclosed radially on the outer side by the guide element (14) which can bear against the wall (4) of the cylinder (5) and covers the groove (13) substantially completely.

6. Complete piston according to Claim 5, **characterized in that** the guide element (14) is produced separately, in relation to the carrier (1), and is connected to the carrier (1).

7. Complete piston according to Claim 5, **characterized in that** the guide element (14) and the carrier (1) are configured from one material and so as to merge into one another in one piece.

8. Complete piston according to one of Claims 1 to 7, **characterized in that** the carrier (1) is formed by way of two piston discs (15, 16) which are arranged axially with respect to one another and can be connected to one another.

9. Complete piston according to Claim 8, **characterized in that** the piston discs (15, 16) are configured as identical parts.

10. Complete piston according to either of Claims 8 and 9, **characterized in that** the piston discs (15, 16) have elevations (26) and cut-outs (27) which are congruent with respect to the said elevations (26).

11. Complete piston according to one of Claims 8 to 10, **characterized in that** the groove (13) is delimited by way of both piston discs (15, 16).

12. Complete piston according to one of Claims 1 to 7, **characterised in that** the carrier (1) is configured in one piece.

13. Complete piston according to Claim 12, **characterized in that** the magnet ring (6) is formed by way of two half shell segments.

14. Complete piston according to Claim 12, **characterized in that** the magnet ring (6) is formed by way of a magnetic substance which is injection-moulded into the groove (13).

15. Complete piston according to Claim 12, **characterized in that** the magnet ring (6) is encapsulated by the polymeric material of the carrier (1).

16. Complete piston according to one of Claims 1 to 15, **characterized in that** the carrier (1) has stop buffers (21, 22) which are arranged on the end side.

17. Complete piston according to one of Claims 1 to 16, **characterized in that** the sealing ring (2) and/or the stop buffers (21, 22) consist/consists of an elastomeric or thermoplastically elastomeric material.

18. Use of a complete piston according to one of Claims 1 to 17 in a pneumatic drive.

## Revendications

1. Piston complet, comprenant un support de forme annulaire circulaire (1) en matériau polymère et au moins une bague d'étanchéité (2) qui est connectée au support (1), la bague d'étanchéité (2) présentant au moins une lèvre d'étanchéité (3) qui fait saillie radialement vers l'extérieur au-delà du support (1) et qui peut être amenée en contact hermétique avec une paroi (4) d'un cylindre (5) entourant le piston complet, une bague magnétique (6) à aimantation permanente étant disposée dans le support (1) et le support (1) présentant au niveau de sa périphérie intérieure (7) un logement de piston (8) qui est limité des deux côtés axialement à chaque fois par un côté frontal (9, 10), **caractérisé en ce qu'**au moins l'un des côtés frontaux (9, 10) présente un biseau (11) avec une surface d'appui pour l'auto-centrage du piston complet sur le logement de piston (8) et **en ce que** le rapport de la largeur axiale du support (1) au niveau de la périphérie intérieure (7) à la largeur des biseaux (11, 12) est de 4,5 à 9.

2. Piston complet selon la revendication 1, **caractérisé en ce que** les deux côtés frontaux (9, 10) du côté de la périphérie interne présentent chacun un biseau (11, 12) pour l'auto-centrage du piston complet.

3. Piston complet selon l'une quelconque des revendications 1 ou 2, **caractérisé en ce que** le support (1) est réalisé entièrement sous forme monobloc.

4. Piston complet selon l'une quelconque des revendications 1 à 3, **caractérisé en ce que** la bague magnétique (6) est disposée dans une rainure (13) du support (1) disposée du côté de la périphérie extérieure, ouverte radialement vers l'extérieur.

5. Piston complet selon l'une quelconque des revendications 1 à 4, **caractérisé en ce que** le piston complet présente un élément de guidage (14) et **en ce que** la bague magnétique (6) est entourée radialement du côté extérieur par l'élément de guidage (14) qui peut être appliqué contre la paroi (4) du cylindre (5) et qui recouvre pratiquement complètement la rainure (13).

6. Piston complet selon la revendication 5, **caractérisé en ce que** l'élément de guidage (14) est réalisé séparément par rapport au support (1) et est connecté au support (1).

7. Piston complet selon la revendication 5, **caractérisé en ce que** l'élément de guidage (14) et le support (1) se prolongent d'une seule pièce l'un dans l'autre et sont réalisés de manière monobloc.

8. Piston complet selon l'une quelconque des revendications 1 à 7, **caractérisé en ce que** le support (1) est formé par deux disques de piston (15, 16) disposés axialement l'un par rapport à l'autre et pouvant être connectés l'un à l'autre.

9. Piston complet selon la revendication 8, **caractérisé en ce que** les disques de piston (15, 16) sont réalisés sous forme de pièces identiques.

10. Piston complet selon l'une quelconque des revendications 8 ou 9, **caractérisé en ce que** les disques de piston (15, 16) présentent des rehaussements (26) et des évidements (27) coïncidant avec ceux-ci.

11. Piston complet selon l'une quelconque des revendications 8 à 10, **caractérisé en ce que** la rainure (13) est limitée par les deux disques de piston (15, 16).

12. Piston complet selon l'une quelconque des revendications 1 à 7, **caractérisé en ce que** le support (1) est réalisé d'une seule pièce.

13. Piston complet selon la revendication 12, **caractérisé en ce que** la bague magnétique (6) est formée par deux segments en demi-coque.

14. Piston complet selon la revendication 12, **caractérisé en ce que** la bague magnétique (6) est formée par une masse magnétique injectée dans la rainure (13).

15. Piston complet selon la revendication 12, **caractérisé en ce que** la bague magnétique (6) est revêtue d'un surmoulage en le matériau polymère du support (1).

16. Piston complet selon l'une quelconque des revendications 1 à 15, **caractérisé en ce que** le support (1) présente des tampons de butée (21, 22) disposés du côté frontal.

17. Piston complet selon l'une quelconque des revendications 1 à 16, **caractérisé en ce que** la bague d'étanchéité (2) et/ou les tampons de butée (21, 22) se composent d'un matériau élastomère ou d'un matériau élastomère thermoplastique.

18. Utilisation d'un piston complet selon l'une quelconque des revendications 1 à 17 dans un entraînement pneumatique.
